Europäisches Patentamt

European Patent Office

Office européen des brevets

(19)

(11) **EP 1 316 164 B1**

(12) **EUROPEAN PATENT SPECIFICATION**

(45) Date of publication and mention
of the grant of the patent:
**02.11.2005 Bulletin 2005/44**

(51) Int Cl.[7]: **H04B 10/10**, G02B 19/00

(21) Application number: **01960950.2**

(86) International application number:
**PCT/GB2001/003812**

(22) Date of filing: **24.08.2001**

(87) International publication number:
**WO 2002/021734 (14.03.2002 Gazette 2002/11)**

(54) **WIRELESS COMMUNICATION RECEIVER USING A TOTALLY INTERNALLY REFLECTING CONCENTRATOR**

EMPFÄNGER FÜR DRAHTLOSEKOMMUNIKATION MIT EINEM KONZENTRATOR MIT TOTALER INNERER REFLEKTION

RECEPTEURS DE COMMUNICATIONS SANS FIL UTILISANT UN CONCENTRATEUR A REFLEXION TOTALE INTERNE

(84) Designated Contracting States:
**AT BE CH CY DE DK ES FI FR GB GR IE IT LI LU MC NL PT SE TR**

(30) Priority: **05.09.2000 GB 0021709**

(43) Date of publication of application:
**04.06.2003 Bulletin 2003/23**

(73) Proprietor: **UNIVERSITY OF WARWICK**
**Coventry, Warwickshire CV4 7AL (GB)**

(72) Inventors:
• **Ramirez-Iniguez, Roberto**
**Tile Hill Coventry, Warwickshire CV4 9HS (GB)**
• **Green, Roger**
**Kenilworth, Warwickshire CV8 2SJ (GB)**

(74) Representative: **Barnfather, Karl Jon et al**
**Withers & Rogers LLP**
**Goldings House,**
**2 Hays Lane**
**London SE1 2HW (GB)**

(56) References cited:
**WO-A-99/05450**

• HO K-P ET AL: "COMPOUND PARABOLIC CONCENTRATORS FOR NARROWBAND WIRELESS INFRARED RECEIVERS" OPTICAL ENGINEERING, SOC. OF PHOTO-OPTICAL INSTRUMENTATION ENGINEERS. BELLINGHAM, US, vol. 34, no. 5, 1 May 1995 (1995-05-01), pages 1385-1395, XP000505003 ISSN: 0091-3286 cited in the application
• NING X ET AL: "DIELECTRIC TOTALLY INTERNALLY REFLECTING CONCENTRATORS" APPLIED OPTICS, OPTICAL SOCIETY OF AMERICA, WASHINGTON, US, vol. 26, no. 2, 15 January 1987 (1987-01-15), pages 300-305, XP002012726 ISSN: 0003-6935
• XIAOHUI NING: "THREE-DIMENSIONAL IDEAL O1/O2 ANGULAR TRANSFORMER AND ITS USES IN FIBER OPTICS" APPLIED OPTICS, OPTICAL SOCIETY OF AMERICA, WASHINGTON, US, vol. 27, no. 19, 1 October 1988 (1988-10-01), pages 4126-4130, XP000032348 ISSN: 0003-6935

## Description

This invention relates to wireless communication receivers, and is concerned more particularly, but not exclusively, with optical wireless communication receivers, such as indoor infrared communication receivers.

It should be understood that the term "optical" is used in this specification to denote not only those wavelengths within the visible spectrum, but also infrared and ultraviolet wavelengths, that is the complete wavelength range from 1nm to 1mm.

Intensive research has been carried out in recent years to improve optical wireless communications systems for indoor and outdoor applications. This is because the optical part of the spectrum offers significant advantages when compared to radio as a medium for short range communication. In particular infrared communication provides high bandwidth at low cost, is immune to radio interference and uses a spectrum which is freely available. Furthermore infrared components are inexpensive, small and consume little power. However infrared also has some drawbacks. In some configurations infrared links may be broken by persons or objects placed in the communication path. Generally indoor optical wireless communications systems operate in "noisy" environments due to artificial lighting or sunlight. A large number of applications make use of intensity modulation/direct detection (IM/DD) as the transmission-reception technique, and the electrical signal-to-noise ratio of a DD receiver is proportional to the square of the received optical power. This means that the system can tolerate only a small path loss, and the transmitter requires a high power output. However the transmitter power output is limited by safety considerations and power consumption.

It is possible to reduce the effects of path loss and background noise by utilising a photodetector having a large effective collection area and narrow optical bandwidth. However the high capacitance of such detectors results in a reduction of receiver bandwidth and a degradation of signal-to-noise ratio. Accordingly it is advantageous to have a transmitter having only a narrow optical spectrum so as to allow the receiver to use a narrowband optical filter to reject ambient light radiation. It is also desirable to make use of an optical concentrator to improve the collection efficiency of the receiver by transforming light incident over a large area into a beam incident on a much smaller area. This enables smaller photodetectors to be used, which decreases the capacitance and the cost and improves receiver sensitivity.

It has been demonstrated that the use of omnidirectional and directed concentrators in conjunction with multilayer bandpass filters effectively screens out unwanted ambient radiation and increases the effective area of the photodetector. J.P. Savicki and C.S.P. Morgan, "Hemispherical Concentrators and Spectral Filters for Planar Sensors in Defuse Radiation Fields", Applied Optics, Vol. 33, No. 34, December 1994, pp. 8057-8061 disclose the use of a hemispherical dielectric concentrator with a filter coated onto its hemispherical surface. Such an arrangement achieves a narrow bandpass, a wide field-of-view and a gain close to $N^2$ (where N is the index of refraction) as long as the hemisphere is large enough compared to the photodetector. Arrangements utilising rotationally symmetric compound parabolic concentrators have also been proposed, for example by K. Ho and J.M. Kahn, "Compound Parabolic Concentrators for Narrowband Wireless Infrared Receivers", Optical Engineering, Vol. 34, No. 5, May 1995, pp. 1385-1395. Arrangements utilising such concentrators have some advantages. For example flat thin-film optical filters can be used which are much easier to fabricate than hemispherical filters. Also such concentrators can be designed to have a gain higher than $N^2$ if the field-of-view is less than 90°, allowing the use of smaller photodetectors and hence reducing cost. However the principal drawback of such concentrators is their excessive length which makes them unsuitable for many practical applications.

It is an object of the invention to provide a narrowband wireless communication receiver having a wide field-of-view which avoids many of the problems associated with previously proposed arrangements.

According to the present invention, there is provided a wireless communication receiver comprising a totally internally reflecting concentrator comprising a body of dielectric material having (i) a receiving surface for receiving incident radiation over a wide field-of-view, (ii) a concavely curved side surface from which radiation passing through the receiving surface is totally internally reflected towards a detection surface provided within the body, (iii) narrowband filter means for filtering the radiation entering the receiving surface before it reaches the detection surface, and (iv) detection means at the detection surface for detecting the radiation reaching the detection surface and for providing an electrical output signal indicative of the radiation detected.

The term "narrowband filter means" is to be understood as encompassing within its scope both filters having intrinsic narrowband features and filters, which are a combination of two or more elements, providing narrowband features, such as a combination of a longpass filter and detection means having a wavelength threshold so that only wavelengths within a required bandwidth are detected.

Preferably the concentrator is a dielectric totally internally reflecting concentrator (DTIRC). DTIRC's can achieve concentrations close to the theoretical maximum limit because they combine receiving surface refraction with total internal reflection from the side surface. Compared with hemispherical concentrators, DTIRC's offer higher concentration and the possibility of using flat thin-film optical filters which are easier to fabricate and allow manufacturing tolerances to be relaxed.

Furthermore this allows the use of smaller photodetectors which reduces the capacitance and the cost and improves receiver sensitivity. DTIRC's have two advantages compared with compound parabolic concentrators in that DTIRC's are of smaller size (typically nearly a fifth of the size) and allow higher concentration, as a result of the design of the curvature of their surfaces and the use of dielectric materials of large refractive index.

In order that the invention may be more fully understood, reference will now be made by way of example, to the accompanying drawings, in which:

Figures 1, 2 and 3 show three different embodiments of the invention;

Figure 4 is a diagram illustrating the fabrication of a thin-film bandpass optical filter;

Figure 5 is a graph of the angular transmission characteristics of a thin-film optical bandpass filter;

Figure 6 is a graph of the variation of the centre wavelength with angle of incidence for a thin-film optical bandpass filter;

Figure 7 is a graph showing the transmission curve of a Gallium Arsenide material superimposed on the typical responsivity of a Silicon photodiode;

Figures 8 and 9 are explanatory diagrams;

Figure 10 shows a further embodiment of the invention;

Figures 11a and 11b are end and side views of an array utilising a number of such receivers; and

Figure 12 is a side view of a modification of the array of Figures 11a and 11b.

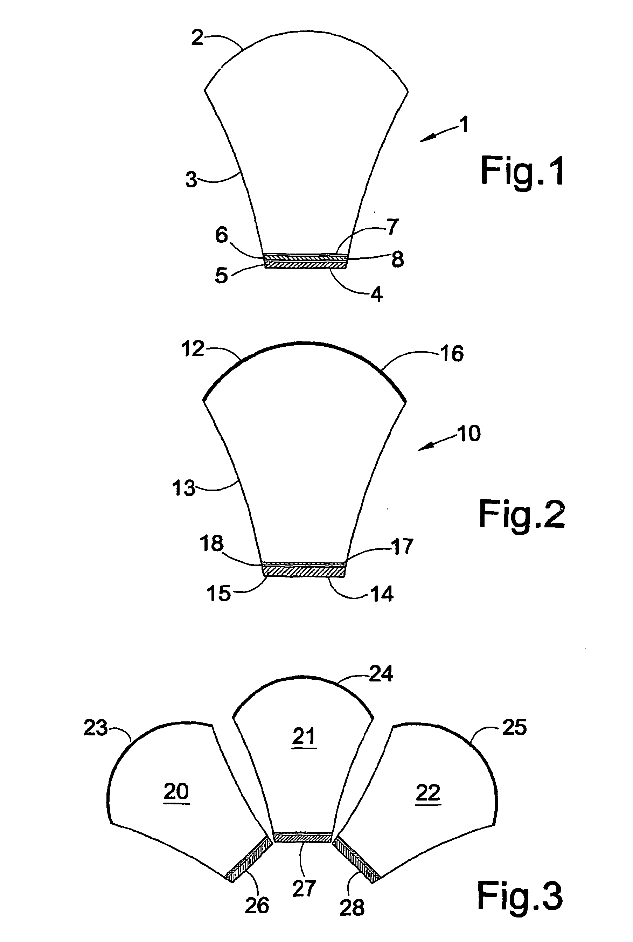

Figure 1 shows a first embodiment of optical wireless communication receiver in accordance with the invention comprising a DTIRC 1 having a concexly curved receiving surface 2, a rotationally symmetric concavely curved side surface 3 and a circular detection surface 4. The detection surface 4 incorporates a photodetector 5, such as an infrared detector for example. A planar thin-film optical filter 6 overlies the detection surface 4, and is sandwiched between index matching films 7 and 8 for matching the refractive index of the filter to the refractive indices on either side of the filter. The DTIRC 1 is made predominantly of a dielectric material having a low velocity factor which, in optical and infrared implementations, is equivalent to saying that the material has a high refractive index (e.g. that it is a material such as perspex or crown glass).

Although such an embodiment possesses the advantage that it incorporates a flat filter, which is easier to fabricate than other shapes of filter, it suffers from the disadvantage of lower sensitivity in some directions due to the reflection at the receiving surface of light at certain angles of incidence, and is therefore mainly suited to applications such as optical telepoint.

Figure 2 shows a second embodiment of the invention comprising a DTIRC 10 having a convexly curved receiving surface 12, a rotationally symmetric concavely curved side surface 13 and a circular detection surface 14 incorporating a photodetector 15. In this case a hemispherical thin film optical filter 16 is provided on the receiving surface 12. Optionally an anti-reflection coating 17 is provided on the detection surface 14, an index matching film 18 being provided on the anti-reflection coating 17. This embodiment is suitable for both directed and diffuse systems in which a compromise can be made between optical gain and the field-of-view of the receiver.

Figure 3 shows a further embodiment comprising an array of DTIRC's 20, 21 and 22 having convexly curved receiving surfaces 23, 24 and 25 disposed at different angles for receiving light over a wide combined field-of-view. Each of the DTIRC's 20, 21 and 22 is of the same general construction as the DTIRC 10 as described with reference to Figure 2. Furthermore the photodetectors 26, 27 and 28 of these DTIRC's 20, 21 and 22 are connected to common detection circuitry (not shown) such that the circuitry is responsive to light received by the three concentrators. Such an arrangement allows a high gain and a total field-of-view of 90° half angle or higher.

Such receivers utilising DTIRC's provide greater collection efficiency as compared with hemispherical concentrators, as well as presenting the possibility of using flat thin-film optical filters which are easier to fabricate and permit relaxation of the manufacturing process. This allows the use of smaller photodetectors, which in turn reduces cost and capacitance and increases the receiver sensitivity.

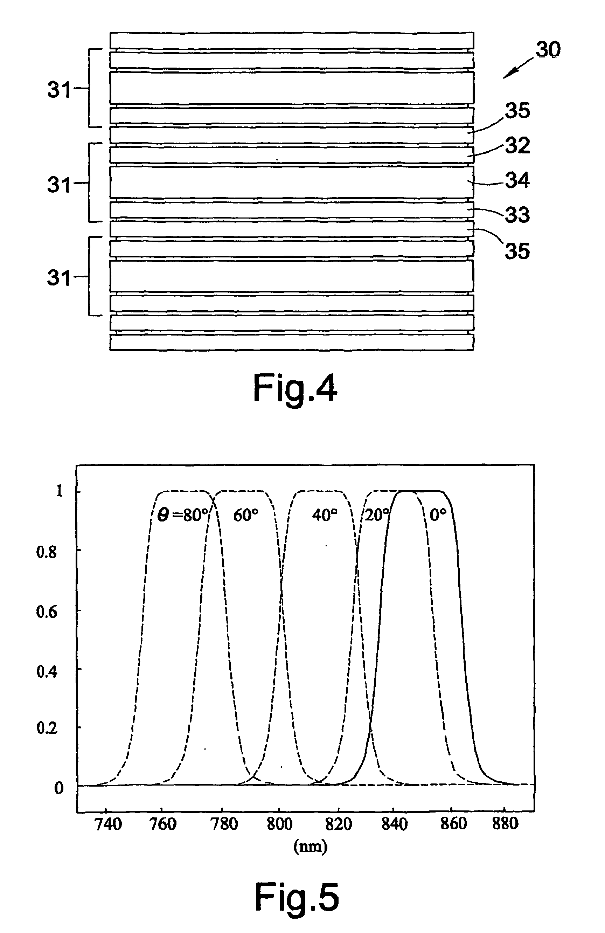

Where such receivers are used in high speed indoor infrared communication systems having transmitters with a narrow optical spectrum, the receivers may use either bandpass or longpass filters to allow the passage of light at substantially only the wavelengths used by the transmitters, whilst rejecting most of the incident radiation that contributes to noise in the receiver. As shown diagrammatically in Figure 4, bandpass optical filters are usually constructed from multiple layers dielectric films which provide filtering by virtue of optical interference. The filter 30 comprises two or three sections 31 in the form of Fabry-Perot resonators which act as comb-line filters. Each section 31 comprises two dielectric layers 32 and 33 separated by a spacer layer 34, and adjacent sections 31 are connected together by a coupler layer 35. The response of these filters has a strong dependence on the angle of incidence, and this must be taken into account when designing the receiver.

It has been shown that the transmission characteristics of the filter can be approximated to an *m*th order Butterworth response of the form:

$$T_f(\lambda_0,\theta) = \frac{T_{fo}}{1+\left(\dfrac{\lambda_0 - \lambda_c(\theta)}{\Delta\lambda/2}\right)^{2m}}$$

where θ is the angle of incidence, $\lambda_0$ is the centre wavelength at normal incidence, $T_{f0}$ is the peak transmission, and $\Delta\lambda$ is the optical bandwidth of the filter. This approximation fails to take into account the degradation in the filter profile and the bandpass ripple, but shows clearly the dependency of the centre wavelength with the angle of incidence. The variation of the centre wavelength of the filter ($\lambda_c$) with the angle of incidence (θ) can be approximated by:

$$\lambda c(\theta)=\lambda_0\sqrt{1-\left(\frac{n_1}{n_s}\right)^2\sin^2\theta}$$

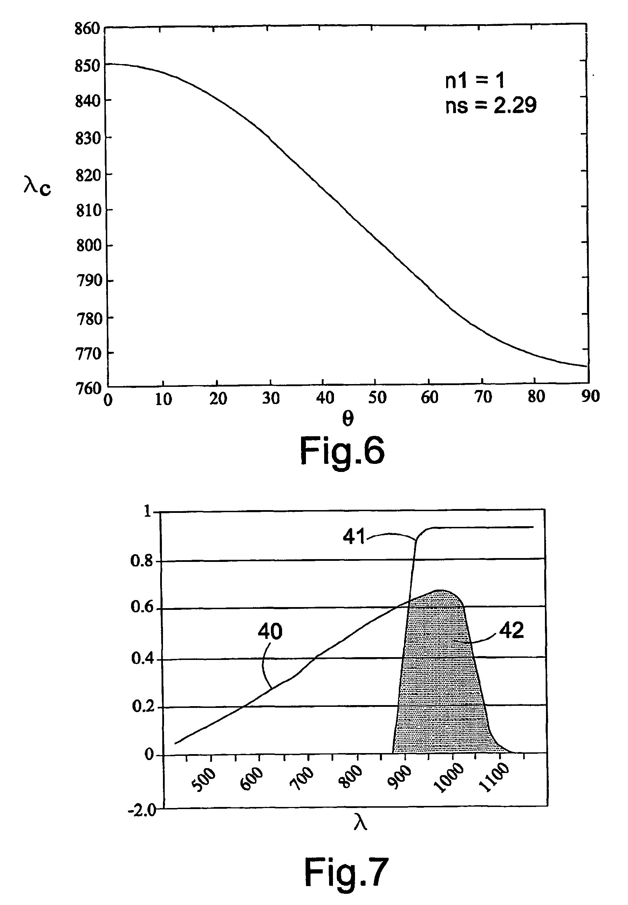

where $n_1$ is the refractive index of the input layer, $n_s$ is the effective refractive index of the spacer, and $\lambda_0$ is the centre wavelength at θ = 0°. Figure 5 shows a typical transmission spectrum of an optical bandpass filter using a Butterworth approximation. Figure 6 shows the angular dependence of centre wavelength for a thin-film filter. Thin-film bandpass filters achieve a high rejection of ambient light because they can have very narrow bandwidths, sometimes below 1 nm.

From Figure 6, it can be seen that, as the value of the angle of incidence of the light increases, the central wavelength of the filter shifts to smaller values, and it will be appreciated that this phenomenon has to be taken account of when designing receivers having a wide field-of-view. In particular it is important to ensure that the spectrum of the transmitter lies within the filter bandwidth in order to maximise the signal-to-ratio at the receiver.

As an alternative to using bandpass filters to reject background noise, it is possible to use longpass filters having a highpass characteristic in combination with Silicon photodetectors having a cutoff wavelength beyond which they do not detect. Figure 7 illustrates this alternative by showing the response characteristic 40 of the Silicon photodiode superimposed on the response 41 of the longpass filter. It can be seen that the photodiode responds only to wavelengths below 1,100 nm, whereas the filter passes wavelengths over about 780 nm giving an optical bandwidth of about 320 nm as indicated by the shaded region 42 in Figure 7. Longpass filters can be fabricated in coloured plastics or glass or a GaAs substrate. Furthermore the transmission characteristics of these filters are basically independent of the angle of incidence of the light so that they can be used with any kind of optical concentrator. However the bandwidth of such filters is relatively large, and they may not therefore be suitable for some applications.

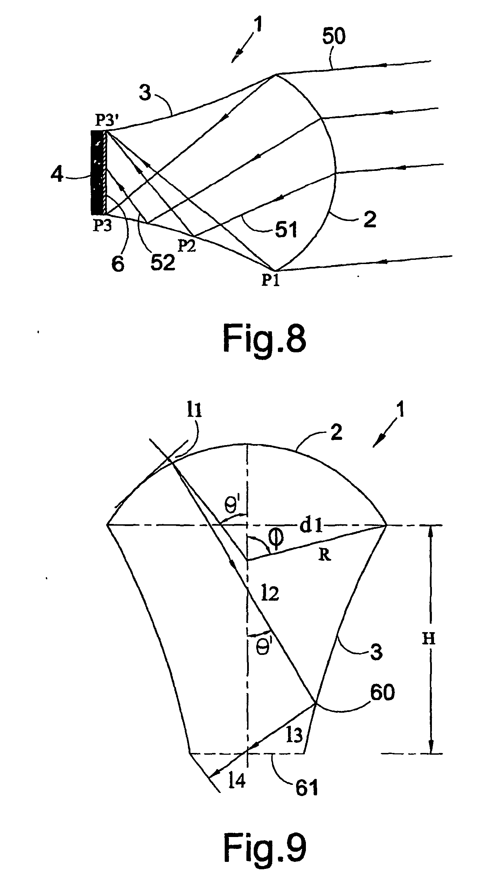

Design of the DTIRC 1 of Figure 1 using a phase-conserving method and the geometrical and optical properties of the concentrator will now be discussed below with reference to Figures 8 and 9 where 2 denotes the receiving surface, 3 denotes the totally internally reflecting side surface and 4 denotes the detection surface. When a set of rays 50 hits the receiving surface 2 at an extreme angle (the acceptance angle) as shown in Figure 8, the rays are refracted and directed to the side surface 3 as shown at 51, where they are totally internally reflected towards the detection surface as shown at 52. The only rays that reach the detection surface 4 are those within the designed acceptance angle of the concentrator. If the rays incident on the receiving surface 2 are beyond the acceptance angle they will exit from the side surface 3, thus missing the detection surface 4.

The best way to design a 3D concentrator is by solving the 2D case since, once the 2D solution is obtained, it is possible to create a 3D equivalent by rotating the 2D profile about its axis of symmetry. The receiving surface 2 is a portion of a sphere, and the slope of the side surface 3 is determined in accordance with the requirements of total internal reflection. It may also be necessary to take account in the design of other subsidiary conditions, such as the requirement for the angle of incidence of light on the detection surface not to exceed a certain value if a flat interference filter is used. Thus, in the case of a DTIRC 1 using a planar filter 6 as illustrated in Figure 8, the profile must be designed in such a way that the reflected rays do not exceed a maximum value of incidence. This restriction is due to the highly dependent response of the filter to the angle of incidence.

The design is based on a phase conserving method by which the exiting extreme rays form a new wavefront after reflection by the side surface 3, and the reflected rays must exist within a predetermined maximum angle. Referring to Figure 8, the side profile can be divided into two parts P1-P2 and P2-P3. In the first part (P1-P2) all extreme rays are directed to the corner point P3' after a single total internal reflection. In the second part (P2 - P3) the exiting extreme rays form a new wavefront after being reflected by the side surface 3. Figure 9 shows the total optical length of a ray from the entrance wavefront to the exit wavefront consisting of four parts 11, 12, 13 and 14. The part 11 extends from a point on the initial wavefront to the receiving surface 2, 12 extends from the receiving surface 2 to the reflection point 60 on the side surface 3, 13 extends from the reflection point 60 to the exit surface 61, and 14 extends from the exit surface 61 to the final wavefront (when rays converge to P3'14 is zero). Thus the total optical path length can be calculated as:

$$\int nds = l_1 + n(l_2 + l_3 + l_4) = const$$

where n denotes the refractive index of the material of the DTIRC.

The profile coordinates can be calculated analytically solving 11,12,13 and 14 by combining the above equation with height constraints and according to proposed subsidiary conditions.

A program based on this method has been developed to generate the side profile curves numerically with the aid of Matlab, the inputs to the program being the acceptance angle, the receiving surface arc angle, the refractive index of the dielectric material and the exit aperture. The program assumes a trial entrance aperture and trial height, and can calculate the profile coordinates with a set of extreme rays, the total number of extreme rays used depending on the precision requirement, and the program beginning with the extreme ray reflected at P3 and ending with the extreme ray entering at P1. The programme compares the trial aperture with the entrance aperture generated, and the new aperture and height are obtained from the difference between the two apertures, the iteration being continued until the trial aperture and calculated aperture converge to within a predetermined error tolerance. Once the entrance aperture is defined, the X-Y coordinates of the DTIRC can be calculated.

When designing an optical wireless communication receiver, a number of different criteria must be taken into account, such as cost, required power, size, weight, availability of components etc., as well as the requirements of directivity and signal-to-noise ratio. Limitations are imposed by the size of the photodetector (directly related to cost and capacitance) and the index of refraction of concentrating material. The index of refraction could be chosen to be as high as possible, in order to achieve maximum concentration with small size. Furthermore, as the index of refraction increases, the geometrical concentration increases. Also, as the receiving surface arc angle changes from low to high, the geometrical concentration is substantially constant for some refractive indices. Apart from the refractive index, the other two parameters that affect the concentration are the receiving surface arc angle and the acceptance angle (assuming a wavefront from a source at a great distance). The geometrical concentration is inversely proportional to the acceptance angle, although generally the concentration is affected to a relatively minor extent by the receiving surface arc angle.

When designing a diffuse link, a compromise must generally be made between geometrical concentration and field-of-view. For instance, it has been calculated that, if a room of 3 cubic metres is diffusely illuminated, a receiver having a field-of-view of 60° half angle is sufficient to cover the whole room. However it will be appreciated that the systems which can take more advantage of the use of DTIRC's (because of the their high gain) are directed and LOS systems. As already commented thin-film bandpass filters have a strong dependence on the angle of incidence, and this must be taken account of when designing the DTIRC. If such a bandpass filter is used and it is necessary to restrict the output angle to below 45°, the receiving surface arc angle must be as high as possible, which will also reduce the size of the concentrator. If the DTIRC is to be designed to have a high maximum output value, the best option is to use a longpass filter combined with a silicon photodetector as described above. This permits high concentration combined with filtering of unwanted background radiation. Generally the geometrical concentration increases as the acceptance angle decreases.

The use of a rotationally-symmetric, three-dimensional DTIRC allows the thermodynamic limit of optical concentration to be approached without requiring a concentrator of excessive length.

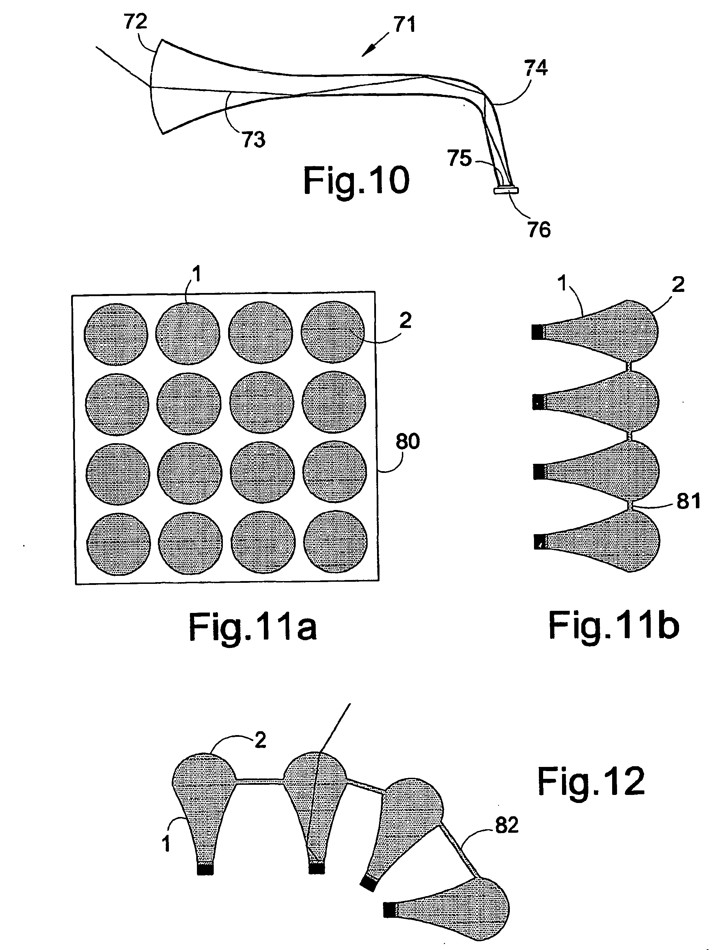

Figure 10 shows a further embodiment in accordance with the invention in which one end of the DTIRC 71 is extended by a light pipe 74 or an optical fibre to permit optical coupling to remotely installed electronic circuitry or to allow different light capture capabilities. It will be appreciated that none of the functionality is lost by extending the end of the optics by means of a light pipe 74 or an optical fibre if the path of a light beam 73 through the receiving surface 72 is considered. The end of the light pipe 74 may incorporate a narrowband interference filter 75 and a circular detection surface 76.

A particular benefit of such an arrangement is that the transmit/receive electronic circuitry can be on a remote printed circuit board, which is conveniently placed for the particular installation. A typical example of this would be a television, video or DVD player in which the optical receiver would face the room to pick up an infrared signal from a remote control unit either directly aimed at it or reflectively. In this case, the receiving surface 72 may incorporate a filter material embedded in the optical material from which the receiver and light pipe are made, in place of the narrowband interference filter 75. This renders the receiver cheap to manufacture in say plastic, and is therefore advantageous commercially.

In a development of the invention, an array of DTIRC's 1 is mounted on a support 80, as shown from one end and one side in Figures 11a and 11b, and the output signals from the associated photodetectors are supplied to common detection circuitry (not shown). This permits a larger capture area and hence greater sensitivity. It also means that the electronic bandwidth is improved, compared to an equivalent single DTIRC receiver with the same overall capture area. The DTIRC's 1 are joined together by links 81 at points where the optical concentration is not disturbed. If flexible links 82 are provided, this allows flexible arrays to be created which can conform to a curved surface, as illustrated in Figure 12.

The concentrators in accordance with the invention described above can be rendered even more adaptable by selection of a particular dielectric material for the required application. For example, it is possible to use a ferroelectric material in place of a straightforward plastics or ceramics material, to enable the device to be tuned to different frequencies or wavelengths. Additionally the tuning can be used to optimise other properties of the device, such as the impedance characteristics and the directionality of the device. It follows that the properties of the device can be varied by use of a suitable electrical or electronic control system, and this would render the device suitable for use in a software-based radio system.

Whilst the above description is given with reference to the use of DTIRC's, it should be understood that the invention also contemplates use of totally internally reflecting concentrators made from other materials in which the velocity of the radiation within the material is less than the free-space velocity. Furthermore it is contemplated that receivers within the scope of the invention will have application with electromagnetic radiation outside the optical wavelength range, as well as with acoustic radiation.

## Claims

1. A wireless communication receiver comprising a totally internally reflecting concentrator (1; 10; 20, 21, 22; 71) said concentrator comprising a body of dielectric material having (i) a receiving surface (2; 12; 23, 24, 25; 72) for receiving incident radiation over a wide field-of-view, (ii) a concavely curved side surface (3; 13) from which radiation passing through the receiving surface (2; 12; 23, 24, 25; 72) is totally internally reflected towards a detection surface (4; 14; 76) provided within the body, (iii) narrowband filter means (6; 16) for filtering the radiation entering the receiving surface before it reaches the detection surface (4; 14; 76), and (iv) detection means (5; 15; 26, 27, 28) at the detection surface (4, 14, 17) for detecting the radiation reaching the detection surface (4; 14; 76) and for providing an electrical output signal indicative of the radiation detected.

2. A receiver according to claim 1, wherein the concentrator (1; 10; 20, 21, 22; 71) is a dielectric totally internally reflecting concentrator (DTIRC).

3. A receiver according to claim 1 or 2, wherein the filter means (6; 16) comprises a thin-film filter.

4. A receiver according to claim 1, 2 or 3, wherein the filter (6; 16) is an interference filter constructed from multiple layers of thin dielectric films.

5. A receiver according to claim 1, 2 or 3, wherein the filter means (6; 16) comprises a longpass filter which is used in combination with detection means (5; 15; 26, 27, 28) having a wavelength threshold so that only wavelengths within a required bandwidth are detected.

6. A receiver according to any one of claims 1 to 5, wherein the filter means comprises a flat filter (6) in the vicinity of the detection surface (4; 76).

7. A receiver according to any one of claims 1 to 5, wherein the filter means comprises a curved filter (16) on the curved receiving surface (12).

8. A receiver according to any preceding claim, wherein an antireflection coating (17) is provided on the detection surface (4; 14; 76).

9. A receiver according to any preceding claim, wherein an index-matching coating (7, 8; 18) is provided on the detection surface (4; 14; 76).

10. A receiver according to any preceding claim, wherein the concentrator (1; 10; 20, 21, 22; 71) has a convexly or concavely curved receiving surface (22; 12; 23, 24, 25; 72).

11. A receiver according to any preceding claim, wherein the concentrator (71) is extended by a light pipe (74) which conducts the incident radiation towards the detection surface (76).

12. A receiver according to any preceding claim, wherein the concentrator is extended by an optical fibre which conducts the incident radiation towards the detection surface.

13. A receiver according to any preceding claim, further comprising detection circuitry for receiving the electrical output signal from the detection means (5; 15; 26, 27, 28).

14. A receiver according to any preceding claim, comprising an array of totally internally reflecting concentrators (1), and detection means for detecting the radiation received by the concentrators (1) and for providing an electrical output signal indicative of the radiation detected.

15. A receiver according to claim 14, wherein the concentrators (1) have receiving surfaces (2) disposed at different angles for receiving incident radiation over a wide combined field-of-view.

16. A receiver according to claim 14 or 15, wherein the concentrators (1) are connected together by flexible links (82) to enable the receiver to conform to a required shape.

**Patentansprüche**

1. Drahtloser Kommunikationsempfänger mit einem Konzentrator mit Totalreflexion (1; 10; 20, 21, 22; 71), wobei der Konzentrator ein Gehäuse aus einem dielektrischen Material mit (i) einer Empfangsfläche (2; 12; 23, 24, 25; 72) zum Empfangen einfallender Strahlung über ein weites Sehfeld, (ii) einer konkav gekrümmten Seitenfläche (3; 13). von welcher eine durch die Empfangsfläche (2; 12; 23, 24, 25; 72) gelangende Strahlung zu einer in dem Gehäuse vorgesehenen Erfassungsfläche (4; 14; 76) totalreflektiert wird, (iii) einer Schmalbandfiltereinrichtung (6; 16) zum Filtern der in die Empfangsfläche eindringenden Strahlung, bevor sie die Erfassungsfläche (4; 14; 76) erreicht, und (iv) einer Erfassungseinrichtung (5; 15; 26, 27, 28) an der Erfassungsfläche (4; 14; 76) zum Erfassen der die Erfassungsfläche (4; 14; 76) erreichenden Strahlung und zum Vorsehen eines die erfasste Strahlung anzeigenden elektrischen Ausgangssignals aufweist.

2. Empfänger nach Anspruch 1, bei welchem der Konzentrator (1; 10; 20, 21, 22; 71) ein dielektrischer Konzentrator mit Totalreflexion (DTIRC) ist.

3. Empfänger nach Anspruch 1 oder 2, bei welchem die Filtereinrichtung (6; 16) ein Dünnfilmfilter aufweist.

4. Empfänger nach Anspruch 1, 2 oder 3, bei welchem das Filter (6; 16) ein aus mehreren Schichten dünner dielektrischer Filme aufgebautes Interferenzfilter ist.

5. Empfänger nach Anspruch 1, 2 oder 3, bei welchem die Filtereinrichtung (6; 16) ein Langpassfilter aufweist, das in Kombination mit einer Erfassungseinrichtung (5; 15; 26, 27, 28) mit einer Wellenlängenschwelle verwendet wird, sodass nur Wellenlängen in einer erforderlichen Bandbreite erfasst werden.

6. Empfänger nach einem der Ansprüche 1 bis 5, bei welchem die Filtereinrichtung ein flaches Filter (6) in der Nähe der Erfassungsfläche (4; 76) aufweist.

7. Empfänger nach einem der Ansprüche 1 bis 5, bei welchem die Filtereinrichtung ein gekrümmtes Filter (16) an der gekrümmten Empfangsfläche (12) aufweist.

8. Empfänger nach einem der vorherigen Ansprüche, bei welchem eine Antireflexionsbeschichtung (17) auf der Erfassungsfläche (4; 14; 76) vorgesehen ist.

9. Empfänger nach einem der vorherigen Ansprüche, bei welchem eine Indexanpassungsbeschichtung (7, 8; 18) auf der Erfassungsfläche (4; 14; 76) vorgesehen ist.

10. Empfänger nach einem der vorherigen Ansprüche, bei welchem der Konzentrator (1; 10; 20, 21, 22; 71) eine konvex oder konkav gekrümmte Empfangsfläche (2; 12; 23, 24, 25; 72) besitzt.

11. Empfänger nach einem der vorherigen Ansprüche, bei welchem der Konzentrator (71) durch einen Lichtleiter (74) verlängert ist, der die einfallende Strahlung zur Erfassungsfläche (76) leitet.

12. Empfänger nach einem der vorherigen Ansprüche, bei welchem der Konzentrator durch eine Lichtleitfaser verlängert ist, die die einfallende Strahlung zur Erfassungsfläche leitet.

13. Empfänger nach einem der vorherigen Ansprüche, ferner mit einer Erfassungsschaltung zum Empfangen des elektrischen Ausgangssignals von der Erfassungseinrichtung (5; 15; 26, 27, 28).

14. Empfänger nach einem der vorherigen Ansprüche, mit einer Anordnung von Konzentratoren mit Totalreflexion (1) sowie einer Erfassungseinrichtung zum Erfassen der durch die Konzentratoren (1) empfangenen Strahlung und zum Vorsehen eines die erfasste Strahlung anzeigenden elektrischen Ausgangssignals.

15. Empfänger nach Anspruch 14, bei welchem die Konzentratoren (1) in unterschiedlichen Winkeln angeordnete Empfangsflächen (2) zum Empfangen einfallender Strahlung über ein weites kombiniertes Sehfeld besitzen.

16. Empfänger nach Anspruch 14 oder 15, bei welchem die Konzentratoren (1) durch flexible Verbindungen (82) miteinander verbunden sind, um den Empfänger an eine erforderliche Form anpassen zu können.

**Revendications**

1. Récepteur de communications sans fil comprenant un concentrateur à réflexion totale interne (1 ; 10 ; 20 ; 21 ; 22 ; 71), ledit concentrateur comprenant un corps en matériau diélectrique ayant (i) une surface de réception (2 ; 12 ; 23, 24, 25 ; 72) pour recevoir un rayonnement incident sur un large champ de vision, (ii) une surface incurvée concave (3 ; 13) depuis laquelle le rayonnement passant par la surface de réception (2 ; 12 ; 23, 24, 25 ; 72) est totalement réflétée de façon interne vers une surface de détection (4 ; 14 ; 76) disposée dans le corps, (iii) des moyens de filtre à bande étroite (6 ; 16) pour filtrer le rayonnement entrant dans la surface de réception avant qu'il n'atteigne la surface de détection (4 ; 14 ; 76) et (iv) des moyens de détection (5 ; 15 ; 26, 27, 28) à la surface de détection (4, 14, 17) pour détecter le rayonnement atteignant la surface de détection (4 ; 14, 76) et pour fournir un signal électrique de sortie indicatif du rayonnement détecté.

2. Récepteur selon la revendication 1, dans lequel le concentrateur (1 ; 10 ; 20, 21, 22 ; 71) est un concentrateur à réflexion totale interne diélectrique (DTIRC).

3. Récepteur selon la revendication 1 ou 2, dans lequel les moyens de filtre (6 ; 16) comprennent un filtre à film mince.

4. Récepteur selon la revendication 1, 2 ou 3, dans lequel le filtre (6 ; 16) est un filtre d'interférence construit à partir de multiples couches de films minces diélectriques.

5. Récepteur selon la revendication 1, 2 ou 3, dans lequel les moyens de filtre (6, 16) comprennent un filtre passe-long qui est utilisé en combinaison avec les moyens de détection (5 ; 15 ; 26, 27, 28) ayant un seuil de longueur d'onde tel que seules les longueurs d'onde sont détectées dans une bande passante donnée.

6. Récepteur selon l'une des revendications 1 à 5, dans lequel les moyens de filtre comprennent un filtre plat (6) au voisinage de la surface de détection (4 ; 76).

7. Récepteur selon l'une des revendications 1 à 5, dans lequel les moyens de filtre comprennent un filtre incurvé (16) sur la surface de réception incurvée (12).

8. Récepteur selon l'une des revendications précédentes, dans lequel un revêtement antiréfléchissant (17) est disposé sur la surface de détection (4 ; 14, 76).

9. Récepteur selon l'une des revendications précédentes, dans lequel un revêtement à indice apparié (7, 8 ; 18) est disposé sur la surface de détection (4 ; 14 ; 76).

10. Récepteur selon l'une des revendications précédentes, dans lequel le concentrateur (1 ; 10 ; 20, 21, 22 ; 71) a une surface de réception incurvée concave ou convexe (22 ; 12; 23, 24, 25 ; 72).

11. Récepteur selon l'une des revendications précédentes, dans lequel le concentrateur (71) est prolongé par un tuyau lumineux (74) qui conduit le rayonnement incident vers la surface de détection (76).

12. Récepteur selon l'une des revendications précédentes, dans lequel le concentrateur est prolongé par une fibre optique qui conduit le rayonnement incident vers la surface de détection.

13. Récepteur selon l'une des revendications précédentes, comprenant en outre une circuiterie de détection pour recevoir le signal de sortie électrique des moyens de détection (5 ; 15, 26, 27, 28).

14. Récepteur selon l'une des revendications précédentes, comprenant une rangée de concentrateurs à réflexion totale interne (1) et des moyens de détection pour détecter le rayonnement reçu par les concentrateurs (1) et pour fournir un signal de sortie électrique indicatif du rayonnement détecté.

15. Récepteur selon la revendication 14, dans lequel les concentrateurs (1) ont des surfaces de réception (2) disposées à des angles différents pour recevoir un rayonnement incident sur un large champ de vision combiné.

16. Récepteur selon la revendication 14 ou 15, dans lequel les concentrateurs (1) sont connectés ensemble par des liaisons flexibles (82) pour permettre au récepteur de se conformer à une forme requise.

Fig.1

Fig.2

Fig.3

Fig.4

Fig.5

**Fig.6**

**Fig.7**

Fig.8

Fig.9

Fig.10

Fig.11a

Fig.11b

Fig.12